## Europäisches Patentamt
## European Patent Office
## Office européen des brevets

(19)

(11) Publication number: **0 133 347**
**B1**

(12)

# EUROPEAN PATENT SPECIFICATION

(45) Date of publication of patent specification: **14.12.88**

(51) Int. Cl.⁴: **F 16 F 9/08, B 60 G 15/12**

(21) Application number: **84304509.7**

(22) Date of filing: **02.07.84**

(54) Pneumatic suspension unit.

(30) Priority: **08.08.83 US 521062**

(43) Date of publication of application:
**20.02.85 Bulletin 85/08**

(45) Publication of the grant of the patent:
**14.12.88 Bulletin 88/50**

(84) Designated Contracting States:
**DE FR GB IT SE**

(56) References cited:
**EP-A-0 080 267**
**DE-A-2 102 268**
**FR-A-2 110 975**
**US-A-3 631 767**

(73) Proprietor: **GENERAL MOTORS CORPORATION**
**General Motors Building 3044 West Grand**
**Boulevard**
**Detroit Michigan 48202 (US)**

(72) Inventor: **Pees, James Mitchell**
**634 Britton Drive**
**Dayton Ohio, 45429 (US)**
Inventor: **Neubauer, Jerry Lee**
**6314 Taylorsville Road**
**Dayton Ohio, 45424 (US)**

(74) Representative: **Breakwell, John Neil Bower**
**et al**
**GM Patent Section Vauxhall Motors Limited**
**Luton Office (F6) P.O. Box No. 3 Kimpton Road**
**Luton Bedfordshire LU2 OSY (GB)**

Courier Press, Leamington Spa, England.

## Description

This invention relates to pneumatic suspension units as specified in the preamble of claim 1, for example as disclosed in US-A-3,372,919.

Prior to the present invention, elastomeric air sleeves have been incorporated with hydraulic shock absorbers and suspension struts to provide a pneumatic spring between the sprung and unsprung vehicle components. Such pneumatic air spring units have provided important benefits in vehicle ride, handling and load levelling, but air sleeve replacement may be required due to wear of the air sleeve from substantial sliding contact with the steel dust tube of the hydraulic shock absorber (damper) or suspension strut.

The present invention is concerned with reducing the wear of an elastomeric air sleeve by the dust tube of the suspension unit.

To this end a pneumatic suspension unit in accordance with the present invention is characterised by the features specified in the characterising portion of claim 1.

In a preferred embodiment of a pneumatic suspension unit in accordance with the present invention, the air sleeve guide that interfits with the dust tube of a shock absorber or suspension strut to reduce direct contact between the elastomeric air sleeve and the dust tube is formed as a cylindrical one-piece plastics guide having a positive, snap-fit connection with the end of the dust tube to present a smooth contact surface for direct engagement with the elastomeric air sleeve, for reduced friction between these components.

In this way it is possible to achieve improved guidance of the air sleeve and service life of an air-adjustable shock absorber or suspension strut unit in which the air sleeve guide is incorporated. The air sleeve guide attached to the end of the dust tube is easily installed, and prevents abrading or other wear of the elastomeric air sleeve by the dust tube during operation of the shock absorber or suspension strut.

The pneumatic suspension unit in accordance with the present invention is very suitable for vehicle use.

The air sleeve guide is conveniently in the form of a guide ring which has snap-fit interconnection with the lower end of the cylindrical dust tube of a hydraulic shock absorber or suspension strut and extends therearound to prevent contact of the end portions of the dust tube and an elastomeric air sleeve for sleeve wear reduction to thereby extend service life. Such a guide ring is easily installed on the end of the dust tube to cover the edges thereof and present a smooth contact surface for air sleeve guidance and to reduce air sleeve abrasion and wear which might otherwise occur during ride movement. The guide ring is positively retained in position on the dust tube.

In the drawing:

Figure 1 is a side elevational view, with parts in section, of a preferred embodiment of a pneumatic suspension unit in accordance with the present invention;

Figure 2 is an enlarged view of a portion of Figure 1, showing an air sleeve guide and its interfitting relationship with the end of a dust tube, in conformity with the present invention; and

Figure 3 is an isometric-type view of the air sleeve guide shown in Figure 2.

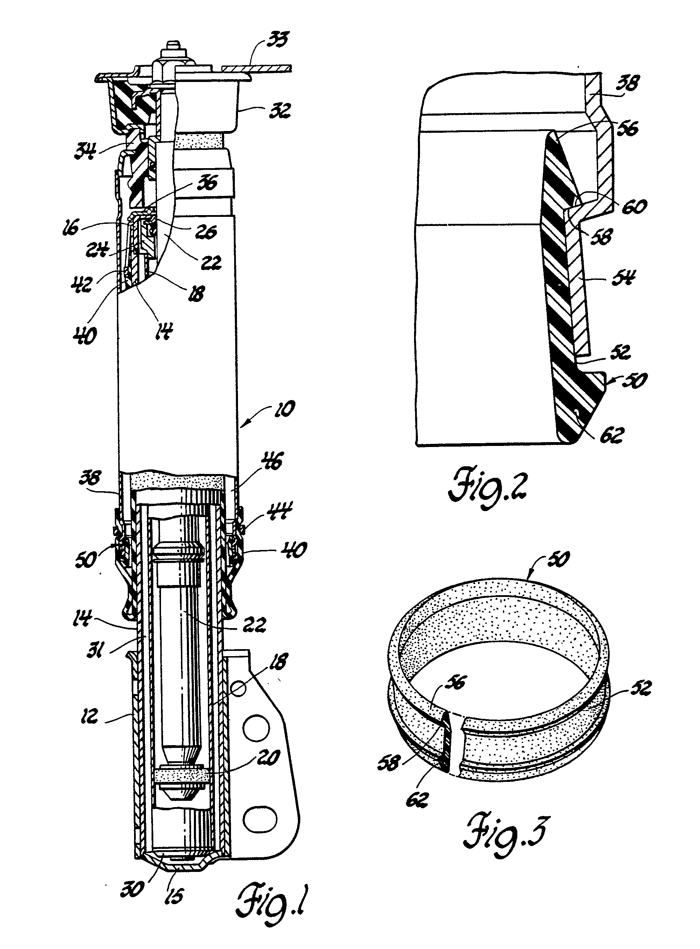

As is shown in Figure 1 of the drawing, a suspension strut 10 has a bracket 12 at its lower end adapted to be secured to a road wheel assembly (not shown) of a vehicle. The strut 10 includes an elongate outer reservoir tube 14 closed by a lower end cap 15 and secured within a cylindrical socket provided by the bracket 12. The reservoir tube 14 extends upwardly from the bracket to a terminal end cap 16 welded or otherwise secured to the upper end of the reservoir tube. The strut contains an elongate oil-filled cylinder tube 18 which is concentric with the reservoir tube 14 and in which a valved piston 20 is slidably mounted. A piston rod 22 attached at its inner end to the piston 20 extends upwardly therefrom through a rod guide 24 mounted on the upper end of the cylinder tube and maintained in position by the end cap 16.

An annular seal 26 is mounted in the rod guide 24 and has annular sealing contact with the piston rod 22 to prevent loss of hydraulic shock absorber oil from the unit as the piston strokes in the cylinder tube during damping operations. A base valve 30 secured to the lower end of the cylinder tube 18 controls the flow of shock absorber oil between the cylinder tube and a reservoir 31 formed between the cylinder tube and the reservoir tube 14 on compression and rebound stroke of the piston 20 for damping spring action. The piston rod 22 extending from the upper end of the damper connects with the upper mount 32, which can be operatively connected to sheet metal 33 of a mounting tower or other support formed in the body of the vehicle.

A cylindrical jounce bumper 34 of a suitable elastomeric material is secured to an upper end of the piston rod immediately below the upper mount 32. In jounce, this bumper is contacted by a bumper plate 36 that is welded or otherwise secured to the top of the end cap 16. A cylindrical steel dust tube 38 extends from upper attachment with the jounce bumper 34 around the reservoir tube 14.

This strut includes an air suspension spring provided by a cylindrical elastomeric air sleeve 40 having its inner, upper end connected to the upper end of the reservoir tube 14 by means of a constricted clamping ring 42. From this clamping ring, the sleeve 40 follows downwardly around the outer periphery of the reservoir tube, and is reversely curved intermediate the ends thereof to extend upwardly and around the lower end of the dust tube 38. A second clamping ring 44, similar to the clamping ring 42, is employed to secure the sleeve to the lower end of the dust tube in an airtight manner. A pneumatic chamber 46 formed by the dust tube 38, the reservoir tube 14, the elastomeric air sleeve 40 and other damper components may be charged with pressurized air to provide a pneumatic spring for vehicle suspension purposes including load levelling. The system for controlling the pressure within the air spring may be based on the system disclosed in the above US-A-3 372 919.

To provide improved operation of the pneumatic suspension spring and extended service life of the sleeve 40, an air sleeve guide 50 is additionally releasably attached to the lower end of the dust tube 38. This guide 50 is a resilient wide torus (ring) of acetal copolymer of other suitable material which has a smooth outer surface and low friction engagement with the elastomeric sleeve 40 to reduce sleeve wear during operation of this strut. The ring-like guide 50 is formed with a central external groove 52 which fits into an outwardly coned lower end 54 of the dust tube as shown in Figure 2. The upper end of the air sleeve guide 50 has an annular nose portion 56 which fits within the inner diameter of the dust tube to facilitate insertion of the guide into the dust tube. During insertion, the nose portion 56 deflects inwardly, and it recovers when in position so that the annular radial shoulder 58 engages an internal shoulder 60 immediately above the lower end of the dust tube to positively retain the guide 50 in place. The lower end of the guide 50 has an enlarged annular contact surface formed by a protuberance 62 that encompasses the terminal edge of the dust tube. The protuberance 62, like the other portions of the guide 50, has a smooth surface, and prevents contact of the air sleeve with portions of the dust tube, to reduce air sleeve abrasion or wear during operation. The guide 50 is manually inserted in the end of the dust tube 38 and urged inwardly to effect a snap fit, with the guide trapped by the shoulder 60. If replacement is necessary, the guide can readily be removed and replaced by a similarly shaped guide or by a guide having a different profile.

**Claims**

1. A pneumatic suspension unit in which a hydraulic damper includes a cylinder tube (18) having a hydraulic fluid therein, a piston (20) mounted for reciprocatory movement in the cylinder tube (18), a piston rod (22) attached to the piston (20) and extending axially in the cylinder tube (18) and through one end thereof, an outer tube (14) disposed around the cylinder tube (18), and a cylindrical dust tube (38) operatively connected to an outer end portion of the piston rod (22) and extending outwardly of and around a portion of the outer tube (14), a cylindrical air sleeve (40) of elastomeric material has an inner end operatively connected to the outer tube (14) and an outer end operatively connected to the dust tube (38) to form an air-adjustable lift spring, first retainer means (42) sealingly secures the inner end of the sleeve (40) to the outer tube (14), the sleeve (40) extends alongside the outer tube (14) and is reversely curved between the ends thereof and extends upwardly around the outer side of the dust tube (38), and second retainer means (44) sealingly secures the upper end of the sleeve (40) to the lower end of the dust tube (38), characterised in that an annular and discrete air sleeve guide (50) has a lower end defining a continuous and smooth annular contact surface disposed around the lower end of the dust tube (38) to directly contact the sleeve (40) to reduce wear of the sleeve (40) by the dust tube (38), and has an upper end (56, 58) defining discrete fastener means (52) to releasably fasten the annular air sleeve guide (50) to a mating retainer surface (60) in the inner surface of the dust tube (38).

2. A pneumatic suspension unit according to claim 1, characterised in that the lower end of the dust tube coaxially surrounds the outer tube (14) and is flared outwardly to facilitate manual installation of the discrete air sleeve guide.

3. A pneumatic suspension unit according to claim 1 or 2, characterised in that the annular air sleeve guide (50) is formed of plastics material, with the annular contact surface of the guide (50) disposed below the lower terminal edge of the dust tube (38).

4. A pneumatic suspension unit according to any one of claims 1 to 3, characterised in that the air sleeve guide (50) is toroidal and has a central external annular groove (52) formed therein between annular upper and lower protuberances (60 and 62) having larger diameters than the diameter of the groove (52) and sized to receive a correspondingly sized lower end portion of the dust tube (38) so that the said air sleeve guide (50) is retained thereon.

5. A pneumatic suspension unit according to claim 4, characterised in that the air sleeve guide (50) is resilient and deflects when inserted into the free end of the dust tube (38), and that the upper protuberance (58) recovers to an undeflected position to lock on to an internal annular shoulder (60) of the dust tube (38).

**Patentansprüche**

1. Pneumatische Aufhängungseinheit, bei der ein hydraulischer Dämpfer ein Zylinderrohr (18) mit darin befindlichem Hydraulikfluid enthält, einen in dem Zylinderrohr (18) hin- und herbewegbar angebrachten Kolben (20), eine an dem Kolben (20) angebrachte Kolbenstange (22), die sich in dem Zylinderrohr (18) axial erstreckt und durch ein Ende desselben hervorsteht, mit einem um das Zylinderrohr (18) angeordneten Außenrohr (14) und einem zylindrischen Staubrohr (38), das mit einem äußeren Endabschnitt der Kolbenstange (22) wirksam verbunden ist und sich außerhalb eines Abschnittes des Außenrohres (14) und um denselben erstreckt, wobei eine zylindrische Lufthülse (40) aus elastomerem Material mit einem inneren Ende wirksam mit dem Außenrohr (14) verbunden und mit einem äußeren Ende wirksam mit dem Staubrohr verbunden ist, um eine mit Luft einstellbare Hebefeder zu bilden, erste Haltemittel (42) dichtend das innere Ende der Hülse (40) an dem Außenrohr (14) befestigen, die Hülse sich längs des Außenrohres (14) erstreckt und zwischen den Enden desselben zurückgeschlagen ist und sich nach oben um die Außenseite des Staubrohres (38) erstreckt, und ein zweites Haltemittel (44) dichtend das obere Ende der Hülse (14) an dem unteren Ende des Staubrohres (38) befestigt, dadurch gekennzeichnet, daß eine ringförmige und diskrete Lufthülsenführung (50) ein unteres Ende besitzt, welches eine kontinuierliche und glatte ringförmige Berührungsfläche bestimmt, die um das untere Ende des Staubrohres (38) angeordnet ist, um die Hülse (40) direkt zu berühren und Verschleiß der Hülse (40) durch das Staubrohr (38) zu reduzieren, und ein oberes Ende (56, 58) besitzt, welches diskrete Befestigungsmittel (52) zum lösbaren Befestigen der ringförmigen Lufthülsenführung (50) an einer angepaßten Haltefläche (60) in der Innenfläche des Staubrohres (38) bestimmen.

2. Pneumatische Aufhängungseinheit nach Anspruch 1, dadurch gekennzeichnet, daß das untere Ende des Staubrohres das Außenrohr (14) koaxial umgibt und nach außen geweitet ist, um eine Installation der diskreten Lufthülsenführung von Hand zu erleichtern.

3. Pneumatische Aufhängungseinheit nach Anspruch 1 oder 2, dadurch gekennzeichnet, daß die ringförmige Lufthülsenführung (50) aus Kunststoffmaterial gebildet ist, wobei die ringförmige Berührungsfläche der Führung (50) unter der unteren Kantenbegrenzung des Staubrohres (38) angeordnet ist.

4. Pneumatische Aufhängungseinheit nach einem der Ansprüche 1 bis 3, dadurch gekennzeichnet, daß die Lufthülsenführung (50) Toroid-Form besitzt und eine zentrale äußere Ringnut (52) in sich ausgebildet enthält zwischen ringförmigen oberen und unteren vorstehenden Bereichen (60 und 62) mit größeren Durchmessern als dem Durchmesser der Nut (52) und zum Aufnehmen eines entsprechend bemaßten unteren Endabschnittes des Staubrohres (38) bemessen, so daß die Lufthülsenführung (50) daran gehalten ist.

5. Pneumatische Aufhängungseinheit nach Anspruch 4, dadurch gekennzeichnet, daß die Lufthülsenführung (50) elastisch ist und beim Einsetzen in das freie Ende des Staubrohres (38) ausweicht, und daß der obere vorstehende Bereich (50) in eine nicht-ausgewichene Lage zurückkehrt, um an einer Innenringschulter (60) des Staubrohres (38) einzurasten.

**Revendications**

1. Ensemble de suspension pneumatique dans lequel un amortisseur hydraulique comprend un tube cylindrique (18) dans lequel se trouve un fluide hydraulique, un piston (20) monté de façon à pouvoir se déplacer en va-et-vient dans ce tube cylindrique (18), une tige de piston (22) solidaire de ce piston (20) et s'étendant axialement dans le tube cylindrique (18) et à travers une extrémité de celui-ci, un tube extérieur (14) disposé autour de ce tube cylindrique (18) et un tube antipoussière cylindrique (38) relié, de façon à coopérer avec elle, à une partie extrême extérieure de la tige de piston (22) et s'étendant à l'extérieur et tout autour d'une partie du tube extérieur (14), un manchon pneumatique cylindrique (40) en matériau élastomère comporte une extrémité intérieure reliée, de façon à coopérer avec lui, au tube extérieur (14) et une extrémité extérieure reliée, de façon à coopérer avec lui, au tube antipoussière (38), de façon à former un amortisseur pneumatique à levée réglable, un premier moyen de retenue (42) fixe de manière étanche l'extrémité intérieure du manchon (40) sur le tube extérieur (14), ce manchon (40) s'étend le long de ce tube extérieur (14), se replie en sens inverse entre ses extrémités et s'étend vers le haut et tout autour de la face extérieure du tube antipoussière (38), et un second moyen de retenue (44) fixe de manière étanche l'extrémité supérieure de ce manchon (40) sur l'extrémité inférieure du tube antipoussière (38), cet ensemble étant caractérisé en ce qu'un guide de manchon pneumatique (50), annulaire et séparé, présente une extrémité inférieure offrant une surface annulaire de contact, continue et sans aspérité, disposée tout autour de l'extrémité inférieure du tube antipoussière (38) de façon à venir directement au contact du manchon (40) afin de réduire l'usure de ce manchon (40) de la part du tube antipoussière (38), et présente une extrémité supérieure (56, 58) offrant un moyen séparé de fixation (52) destiné à fixer de manière amovible le guide annulaire de manchon pneumatique (50) sur une surface de retenue (60) l'épousant et réalisée sur la surface intérieure du tube antipoussière (38).

2. Ensemble de suspension pneumatique suivant la revendication 1, caractérisé en ce que l'extrémité inférieure du tube antipoussière entoure de manière coaxiale le tube extérieur (14) et s'évase vers l'extérieur de façon à faciliter une mise en place manuelle du guide de manchon pneumatique séparé.

3. Ensemble de suspension pneumatique suivant la revendication 1 ou 2, caractérisé en ce que le guide annulaire de manchon pneumatique (50) est formé d'une matière plastique, la surface annulaire de contact de ce guide (50) étant disposée au-dessous du bord extrême inférieur du tube antipoussière (38).

4. Ensemble de suspension pneumatique suivant l'une quelconque des revendications 1 à 3, caractérisé en ce que le guide de manchon pneumatique (50) est toroïdal et présente une gorge annulaire extérieure centrale (52) qui y est ménagée entre des parties en saillie supérieure et inférieure (60 et 62) annulaires, offrant des diamètres supérieurs au diamètre de la gorge (52) et dimensionnés de façon à recevoir une partie extrême inférieure, dimensionnée de façon correspondante, du tube antipoussière (38) de façon que le guide de manchon pneumatique (50) soit retenu sur celui-ci.

5. Ensemble de suspension pneumatique suivant la revendication 4, caractérisé en ce que le guide de manchon pneumatique (50) est élastique et s'infléchit lorsqu'on l'introduit dans l'extrémité libre du tube antipoussière (38), et en ce que la partie en saillie supérieure (58) reprend sa forme initiale, dans une position non déformée, de façon à se verrouiller sur un épaulement annulaire intérieur (60) du tube antipoussière (38).

*Fig.1*

*Fig.2*

*Fig.3*